# EUROPEAN PATENT APPLICATION

(11) **EP 2 943 021 A1**
(43) Date of publication of application: **11.11.2015**
(21) Application number: 13870353.3
(22) Date of filing: 30.08.2013
(51) Int. Cl.: H04W 52/14

(54) **METHOD AND APPARATUS FOR CONFIGURING DOWNLINK POWER PARAMETERS**

(30) Priority: 04.01.2013 CN 201310001421
(71) Applicant: ZTE Corporation, Shenzhen City, Guangdong Province 518057 (CN)
(72) Inventor: XU, Hanqing, Shenzhen Guangdong Province 518057 (CN); ZHAO, Yajun, Shenzhen Guangdong Province 518057 (CN); MO, Linmei, Shenzhen Guangdong Province 518057 (CN); HUANG, Chen, Shenzhen Guangdong Province 518057 (CN); LI, Yujie, Shenzhen Guangdong Province 518057 (CN); SUN, Baoyu, Shenzhen Guangdong Province 518057 (CN); CHEN, Guofeng, Shenzhen Guangdong Province 518057 (CN); QIN, Hongfeng, Shenzhen Guangdong province 518057 (CN)
(74) Representative: Novagraaf Technologies
(86) International application number: PCT/CN2013/082671
(87) International publication number: WO 2014/106390

(57) **Abstract**

A method and apparatus for configuring downlink power parameters are disclosed. The method includes: a base station configuring downlink power parameters for both a primary cell and a coordinated cell of a terminal in a Coordinated Multi-Point (CoMP) set in which the terminal is located; and the base station notifying the terminal of the downlink power parameters.

## Description

### Technical Field

The present invention relates to the field of wireless communication, and particularly, to a method and apparatus for configuring downlink power parameters.

### Background of the Related Art

With people's continuously increasing requirements on the future wireless communication, the cell-edge spectrum efficiency and user experience are more valued, how to improve the cell-edge transmission quality and throughput capacity becomes a hot research topic. In a Coordinated Multi-Point (CoMP) technology, a cell-edge interference problem can be effectively solved through cooperative transmission and receiving of antennas of multiple Access Points (APs), thereby improving the capacity and reliability of wireless links. Therefore, the CoMP technology as a key technology is introduced into a Long Term Evolution-Advanced (LTE-A) system.

In a Joint Transmission (JT) mechanism in the CoMP technology, a method of a primary cell and a coordinated cell jointly transmitting a Physical Downlink Shared Channel (PDSCH) is used. In a Dynamic Point Selection (DPS) mechanism, a single cell is dynamically selected to send the PDSCH according to a channel condition from the primary cell and coordinated cell to a terminal.

That is, when either the CoMP JT mechanism or DPS mechanism is used, the possibility of the coordinated cell sending the PDSCH exists. In this case, it may cause an increased amplitude error of the downlink channel estimation, thereby affecting the system performance.

### Summary of the Invention

The embodiments of the present invention provide a method and apparatus for configuring downlink power parameters, which solves a problem that an amplitude estimation in the downlink channel estimation is inaccurate, thereby improving the system performance.

The embodiment of the present invention provides a method for configuring downlink power parameters, which comprises:
a base station configuring downlink power parameters for both a primary cell and a coordinated cell of a terminal in a coordinated multi-point CoMP set in which the terminal is located; and
the base station notifying the terminal of the downlink power parameters.

Alternatively, the base station configuring downlink power parameters for both a primary cell and a coordinated cell of a terminal in a CoMP set in which the terminal is located comprises:
when a joint transmission JT mechanism of CoMP is used, the base station configuring that the primary cell and the coordinated cell of the terminal use a same power ratio between different symbols.
Alternatively, the downlink power parameters contain a cell-specific parameter P_{B};
the base station configuring downlink power parameters for both a primary cell and a coordinated cell of a terminal in a CoMP set in which the terminal is located comprises:
   when a joint transmission JT mechanism of the CoMP is used, the base station configuring that the primary cell and the coordinated cell of the terminal use the same P_{B}.

Alternatively, the base station configuring downlink power parameters for both a primary cell and a coordinated cell of a terminal in a CoMP set in which the terminal is located comprises:
when a dynamic point selection DPS mechanism of the CoMP is used, the base station configuring that the primary cell and the coordinated cell of the terminal use a same reference signal power parameter, a same OFDM symbol power parameter containing a CRS, and a same OFDM symbol power parameter excluding a CRS.

Alternatively, the downlink power parameters contain a cell-specific parameter P_{B}, a cell-specific parameter reference signal power P_{RS} and a terminal-specific parameter P_{A};
the base station configuring downlink power parameters for both a primary cell and a coordinated cell of a terminal in a CoMP set in which the terminal is located comprises:
when a dynamic point selection DPS mechanism of the CoMP is used, the base station configuring that the primary cell and the coordinated cell of the terminal use the same P_{B}, P_{RS} and P_{A}.

Alternatively, the downlink power parameters contain a P_{B}, a P_{RS} and a P_{A};
the base station configuring downlink power parameters for both a primary cell and a coordinated cell of a terminal in a CoMP set in which the terminal is located comprises:
when a DPS mechanism of the CoMP is used, the base station configuring downlink power parameters for the primary cell of the terminal and configuring downlink power parameters for the coordinated cell of the terminal, and after selecting a used single cell, modifying the downlink power parameters of the primary cell of the terminal to downlink power parameters of the used single cell selected.

Alternatively, the downlink power parameters contain a cell-specific parameter P_{B}, a cell-specific parameter reference signal power P_{RS} and a terminal-specific parameter P_{A};
the base station configuring downlink power parameters for both a primary cell and a coordinated cell of a terminal in a CoMP set in which the terminal is located comprises:
when a DPS mechanism of the CoMP is used, the base station configuring respective independent downlink power parameters for the primary cell and the coordinated cell of the terminal.

Alternatively, the base station notifying the terminal of the downlink power parameters comprises:
the base station sending the downlink power parameters of the used single cell selected in the DPS mechanism to the terminal.

The embodiment of the present invention further provides an apparatus for configuring downlink power parameters, which comprises: a base station power parameter configuration and constraint unit and a base station power parameter selection and signaling sending unit, wherein:
the base station power parameter configuration and constraint unit is configured to: configure downlink power parameters for both a primary cell and a coordinated cell of a terminal in a coordinated multi-point CoMP set in which the terminal is located; and
the base station power parameter selection and signaling sending unit is configured to: notify the terminal of the downlink power parameters.

Alternatively, the base station power parameter configuration and constraint unit is configured to configure downlink power parameters for both a primary cell and a coordinated cell of a terminal in a CoMP set in which the terminal is located by means of:
when a joint transmission JT mechanism of the CoMP is used, configuring that the primary cell and the coordinated cell of the terminal use a same power ratio between different symbols.

Alternatively, the downlink power parameters contain a cell-specific parameter P_{B};
the base station power parameter configuration and constraint unit is configured to configure downlink power parameters for both a primary cell and a coordinated cell of a terminal in a CoMP set in which the terminal is located by means of:
when a joint transmission JT mechanism of the CoMP is used, configuring that the primary cell and the coordinated cell of the terminal use a same P_{B}.

Alternatively, the base station power parameter configuration and constraint unit is configured to configure downlink power parameters for both a primary cell and a coordinated cell of a terminal in a CoMP set in which the terminal is located by means of:
when a dynamic point selection DPS mechanism of the CoMP is used, configuring that the primary cell and the coordinated cell of the terminal use a same reference signal power parameter, a same OFDM symbol power parameter containing a CRS, and a same OFDM symbol power parameter excluding a CRS.

Alternatively, the downlink power parameters contain a cell-specific parameter P_{B}, a cell-specific parameter reference signal power P_{RS} and a terminal-specific parameter P_{A};
the base station power parameter configuration and constraint unit is configured to configure downlink power parameters for both a primary cell and a coordinated cell of a terminal in a CoMP set in which the terminal is located by means of:
when a dynamic point selection DPS mechanism of the CoMP is used, configuring that the primary cell and the coordinated cell of the terminal use a same P_{B}, P_{RS} and P_{A}; or,
configuring downlink power parameters for the primary cell of the terminal and configuring downlink power parameters for the coordinated cell of the terminal, and after selecting a used single cell, modifying the downlink power parameters of the primary cell of the terminal to downlink power parameters of the used single cell selected; or,
configuring respective independent downlink power parameters for the primary cell and the coordinated cell of the terminal.

Alternatively, the base station power parameter selection and signaling sending unit is configured to notify the terminal of the downlink power parameters by means of:
when the base station power parameter configuration and constraint unit configures the respective independent downlink power parameters for the primary cell and the coordinated cell of the terminal, sending the downlink power parameters of the used single cell selected in the DPS mechanism to the terminal.

In conclusion, in the present invention, the downlink power parameters are configured for both the primary cell and the coordinated cell of the terminal in the CoMP set in which the terminal is located, and the terminal is notified of the downlink power parameters, which can solve the system performance problem caused by the inaccurate downlink channel estimation of the terminal, thereby improving the system performance.

### Brief Description of Drawings

FIG. 1 is a flow chart of a method for configuring downlink power parameters according to the embodiment of the present invention.
FIG. 2 is an architecture chart of an apparatus for configuring downlink power parameters according to the embodiment of the present invention.
FIG. 3 is an architecture chart of a terminal according to the embodiment of the present invention.

### Preferred Embodiments of the Invention

The embodiments of the present invention will be described in detail in combination with the accompanying drawings below. It should be noted that the embodiments in the present invention and the characteristics in the embodiments can be optionally combined with each other in the condition of no conflict.

In view of that *ρ_{B}*/*ρ_{A}* configured at an upper layer may not be 1, that is, *ρ_{A}* and *ρ_{B}* may be unequal, as can be known from the definitions of the *ρ_{A}* and *ρ_{B}*, when the *ρ_{A}* and *ρ_{B}* are unequal, power of an Orthogonal Frequency Division Multiplexing (OFDM) symbol containing Cell-specific Reference Signals (CRS) and power of an OFDM symbol excluding the CRS are different; when a CoMP JT/DPS mechanism is used, according to the 3rd Generation Partnership Project (3GPP) release10/11 (R10/R11) standard, the terminal only knows a P_{A}, P_{B} and CRS power configured value (i.e. P_{RS}) of its resident cell, but the P_{A}, P_{B} and P_{RS} of the resident cell and the P_{A}, P_{B} and P_{RS} of the coordinated cell may be different, so that the *ρ_{B}*/*ρ_{A}* of the resident cell and the *ρ_{B}*/*ρ_{A}* of the coordinated cell may also be different; when the downlink channel estimation is performed through UE-specific Reference Signals (UE-RS) (also called as Demodulation Reference Signals (DMRS)), the DMPS power is consistent with the power of the OFDM symbol excluding the CRS of the resident cell, since the power of the OFDM symbol containing the CRS of the resident cell and the power of the OFDM symbol excluding the CRS of the resident cell are different, the DMPS power is inconsistent with the power of the OFDM symbol containing the CRS of the resident cell, and since the *ρ_{B}*/*ρ_{A}* of the resident cell and the *ρ_{B}*/*ρ_{A}* of the coordinated cell may also be different, the DMPS power may also be inconsistent with the power of the OFDM symbol of the coordinated cell, thereby causing an increased amplitude error of the downlink channel estimation.

Wherein, *ρ_{A}* represents a ratio of energy of PDSCH resource elements excluding cell reference signals to energy of cell reference signal resource elements, and *ρ_{B}* represents a ratio of energy of PDSCH resource elements containing cell reference signals to energy of cell reference signal resource elements.

In the embodiment, the base station configures downlink power parameters for both a primary cell and a coordinated cell in a CoMP set in which a terminal is located, so as to solve the problem of inaccurate amplitude in the downlink channel estimation.

A method for configuring downlink power parameters according to the embodiment will be described in combination with the accompanying drawings below.

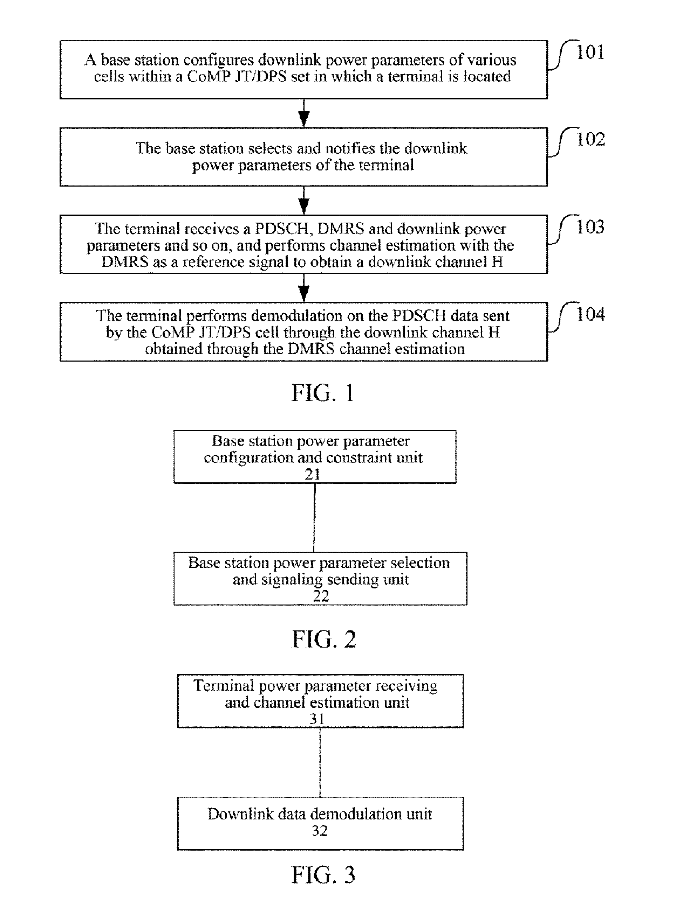

As shown in FIG. 1, the method for configuring the downlink power parameters according to the embodiment includes the following steps.

In step 101, a base station configures downlink power parameters of various cells within a CoMP JT/DPS set in which a terminal is located, including a P_{B}, P_{RS} and P_{A} and so on.

(One). If a JT mechanism is used, the base station configures that power ratios between different symbols of all cells within a CoMP JT set are identical.

If the JT mechanism is used, the base station configures that all the cells within the CoMP JT set use the same P_{B}, that is, it is to guarantee that the *ρ_{B}*/*ρ_{A}* of all the cells within the CoMP JT set is the same, that is, the power ratios between different symbols of all the cells are identical.

Here, a method of firstly configuring and then constraining can be adopted (it is to firstly configure the downlink power parameters of various cells, and then keep the P_{B} of the coordinated cell identical with the P_{B} of the resident cell, or keep the P_{B} of the resident cell identical with the P_{B} of the coordinated cell), and a method of simultaneously configuring the downlink power parameters of various cells in a constraint condition of the same P_{B} also can be adopted. Moreover, the cells within the CoMP JT set can be configured with same P_{RS} and P_{A}, or they can be configured with different P_{RS} and P_{A}.

In the related art, only downlink power parameters of a single cell (a resident cell, namely a primary cell) are configured, and downlink power parameters of a coordinated cell in the JT set are not configured and constrained, which causes that the terminal cannot perform accurate channel estimation on data jointly transmitted by the multiple cells according to the received downlink power parameters of the resident cell. However, in the embodiment, by configuring downlink power parameters of the multiple cells and increasing a constraint condition that the P_{B}s of the cells within the set are equal, the problem of inaccurate amplitude of the channel estimation is solved.

(Two). If a DPS mechanism is used, the base station configures and constrains downlink power parameters of various cells within a CoMP DPS set. The base station can firstly configure the parameters, and then perform the parameter relationship constraint, and it also can configure the parameters in a parameter relationship constraint condition. The step can include the following operation ways.
(1). The base station configures and constrains that all coordinated cells within the CoMP DPS set use downlink power parameters identical with that of the resident cell, including: reference signal power parameters and power parameters of different OFDM symbols are correspondingly identical.
   The base station configures and constrains that all the coordinated cells within the CoMP DPS set use the downlink power parameters: P_{B}, P_{RS} and P_{A}, identical with that of the resident cell.
   In the related art, only the downlink power parameters of the single cell are configured, and the downlink power parameters of the coordinated cell in the DPS set are not configured and constrained. When the coordinated cell is scheduled through the DPS mechanism to send the downlink data, it causes that the terminal cannot perform accurate channel estimation on the data sent by the coordinated cell according to the received downlink power parameters of the resident cell. However, in the embodiment, by configuring the downlink power parameters of the multiple cells and adding the above constraint condition, the problem of inaccurate amplitude of the channel estimation is solved.
(2). The base station respectively configures the downlink power parameters for the resident cell and the coordinated cell, and after selecting a used single cell in the DPS mechanism, the base station modifies the downlink power parameters of the resident cell of the terminal to the downlink power parameters of the used single cell selected in the DPS.
   In the related art, only the downlink power parameters of the single cell (resident cell) are configured, and the downlink power parameters of the coordinated cell in the DPS set are not configured and constrained. When the coordinated cell is scheduled through the DPS mechanism to send the downlink data, it causes that the terminal cannot perform accurate channel estimation on the data sent by the coordinated cell according to the received downlink power parameters of the resident cell. However, in the embodiment, by configuring the downlink power parameters of the multiple cells and adding the above constraint condition, the problem of inaccurate amplitude of the channel estimation is solved.
(3). The base station configures the downlink power parameters of various cells within the CoMP DPS set, makes no constraint to a parameter relation between the cells, and configures respective independent downlink power parameters.

In the related art, only the downlink power parameters of the single cell (resident cell) are configured and notified, and the downlink power parameters of the coordinated cell in the DPS set are not configured, constrained and notified. When the coordinated cell is scheduled through the DPS mechanism to send the downlink data, it causes that the terminal cannot perform accurate channel estimation on the data sent by the coordinated cell according to the received power parameters of the resident cell. However, in the embodiment, by configuring the downlink power parameters of the multiple cells and adding the following selected notification operation, the problem of inaccurate amplitude of the channel estimation is solved.

In the embodiment, the downlink power parameters of various cells can be firstly configured, and when the DPS cell is scheduled to send the data, then the following notification operation is executed, or after the downlink power parameters of the DPS cell are configured (it is not required to configure the power parameters of all the cells), the following notification operation can be executed promptly.

In step 102, the base station selects and notifies the downlink power parameters: P_{B}, P_{RS} and P_{A}, etc. of the terminal.

(One). With respect to (One) in the step 101, if the JT mechanism is used, the base station can select and notify the downlink power parameters of the resident cell of the terminal through a Radio Resource Control (RRC) signaling.

(Two). With respect to (Two) in the step 101, if the DPS mechanism is used, the base station selects and notifies the downlink power parameters of the terminal, and the following operation ways can be included.
(1). With respect to (1) and (2) in (Two) in the step 101, the base station selects the downlink power parameters of the resident cell, and notifies the terminal of the downlink power parameters through the RRC signaling.
(2). With respect to (3) in (Two) in the step 101, the base station selects the downlink power parameters of the used single cell selected in the DPS, and notifies the terminal of the downlink power parameters through the RRC signaling.

In step 103, the terminal receives the information including the PDSCH, DMRS and downlink power parameters P_{B}, P_{RS} and P_{A} and so on, and performs channel estimation with the DMRS as the reference signal to obtain a downlink channel H.

(One). With respect to (One) in the step 102, if the JT mechanism is used, the terminal considers that it receives the downlink power parameters and data of the resident cell, and the correct parameter constraint has been made, and these power parameters are used to perform the DMRS channel estimation.

(Two). With respect to (Two) in the step 102, if the DPS mechanism is used, the following operation ways are included.
(1). With respect to (1) in (Two) in the step 102, the terminal considers that it receives the downlink power parameters and data of the resident cell, and the correct parameter constraint has been made, and these power parameters are used to perform the correct DMRS channel estimation.
(2). With respect to (2) in (Two) in the step 102, the terminal considers that it receives the downlink power parameters and data of the single cell selected in the DPS, and the correct parameter constraint has been made, and these power parameters are used to perform the correct DMRS channel estimation.

In step 104, the terminal performs demodulation on the PDSCH data sent by the CoMP JT/DPS cell through the downlink channel H obtained through the DMRS channel estimation.

Since the base station has correctly configured, constrained, selected and notified the downlink power parameters, the system performance problem caused by the inaccurate downlink channel estimation of the terminal is solved.

As shown in FIG. 2, the embodiment also provides an apparatus for configuring downlink power parameters, which includes: a base station power parameter configuration and constraint unit 21 and a base station power parameter selection and signaling sending unit 22, wherein:
the base station power parameter configuration and constraint unit 21 is used to configure downlink power parameters for both a primary cell and a coordinated cell of a terminal in a CoMP set in which the terminal is located; and
the base station power parameter selection and signaling sending unit 22 is used to notify the terminal of the downlink power parameters.

Wherein, the base station power parameter configuration and constraint unit 21 is used to configure downlink power parameters for both a primary cell and a coordinated cell of a terminal in a CoMP set in which the terminal is located by means of:
when a JT mechanism of the CoMP is used, configuring that the primary cell and the coordinated cell of the terminal use a same power ratio between different symbols.

Wherein, the downlink power parameters contain a cell-specific parameter P_{B};
the base station power parameter configuration and constraint unit 21 is used to configure downlink power parameters for both a primary cell and a coordinated cell of a terminal in a CoMP set in which the terminal is located by means of:
when a JT mechanism of the CoMP is used, configuring that the primary cell and the coordinated cell of the terminal use a same P_{B}.

Wherein, the base station power parameter configuration and constraint unit 21 is used to configure downlink power parameters for both a primary cell and a coordinated cell of a terminal in a CoMP set in which the terminal is located by means of:
when a dynamic point selection DPS mechanism of the CoMP is used, configuring that the primary cell and the coordinated cell of the terminal use a same reference signal power parameter, a same OFDM symbol power parameter containing a CRS, and a same OFDM symbol power parameter excluding a CRS.

Wherein, the downlink power parameters contain a cell-specific parameter P_{B}, a cell-specific parameter reference signal power P_{RS} and a terminal-specific parameter P_{A};
the base station power parameter configuration and constraint unit 21 is used to configure downlink power parameters for both a primary cell and a coordinated cell of a terminal in a CoMP set in which the terminal is located by means of:
when a DPS mechanism of the CoMP is used, configuring that the primary cell and the coordinated cell of the terminal use a same P_{B}, P_{RS} and P_{A}; or, respectively configuring downlink power parameters for the primary cell and the coordinated cell of the terminal, and after selecting a used single cell, modifying the downlink power parameters of the primary cell of the terminal to downlink power parameters of the used single cell selected; or, configuring respective independent downlink power parameters for the primary cell and the coordinated cell of the terminal.

The base station power parameter selection and signaling sending unit 22 is used to notify the terminal of the downlink power parameters by means of:
when the base station power parameter configuration and constraint unit 21 configures the respective independent downlink power parameters for the primary cell and the coordinated cell of the terminal, sending the downlink power parameters of the used single cell selected in the DPS mechanism to the terminal.

As shown in FIG. 3, the embodiment also provides a terminal, which includes: a terminal power parameter receiving and channel estimation unit 31 and a downlink data demodulation unit 32, wherein:
the terminal power parameter receiving and channel estimation unit 31 is used to receive information including a PDSCH, DMRS and downlink power parameters P_{B}, P_{RS} and P_{A} and so on, and perform channel estimation with the DMRS as the reference signal to obtain a downlink channel H; and
the downlink data demodulation unit 32 is used to perform demodulation on the PDSCH data sent by the CoMP JT/DPS cell by using the downlink channel H obtained through the DMRS channel estimation.

Apparently, the skilled in the art should understand that the modules or steps of the present invention mentioned above can be implemented through a universal calculating apparatus, and they can be concentrated on a single calculating apparatus or distributed in a network consisting of multiple calculating apparatuses. Alternatively, the modules or steps can be implemented through program codes which can be executed by the calculating apparatus, thus, they can be stored in a storage apparatus to be executed by the calculating apparatus, or they can be made into multiple integrated circuit modules respectively, or multiple modules or steps of them can be made into a single integrated circuit module to be implemented. Therefore, the embodiment of the present invention is not limited to any combination of hardware and software in a specific form.

The above description is only the preferred embodiments of the present invention, which is not used to limit the present invention. The present invention can have various modifications and changes for the skilled in the art. All the modifications, equivalent substitutions, and improvements, etc. made within the spirit and principle of the present invention shall fall into the protection scope of the claims appended to the present invention.

### Industrial Applicability

With the method and apparatus of the embodiments of the present invention, the system performance problem caused by the inaccurate downlink channel estimation of the terminal can be solved, thereby improving the system performance.

## Claims

1. A method for configuring downlink power parameters, comprising:
a base station configuring downlink power parameters for both a primary cell and a coordinated cell of a terminal in a coordinated multi-point CoMP set in which the terminal is located; and
the base station notifying the terminal of the downlink power parameters.

2. The method according to claim 1, wherein:
the base station configuring downlink power parameters for both a primary cell and a coordinated cell of a terminal in a CoMP set in which the terminal is located comprises:
when a joint transmission JT mechanism of CoMP is used, the base station configuring that the primary cell and coordinated cell of the terminal use a same power ratio between different symbols.

3. The method according to claim 1, wherein:
the downlink power parameters contain a cell-specific parameter P_{B};
the base station configuring downlink power parameters for both a primary cell and a coordinated cell of a terminal in a CoMP set in which the terminal is located comprises:
when a JT mechanism of CoMP is used, the base station configuring that the primary cell and coordinated cell of the terminal use a same P_{B}.

4. The method according to claim 1, wherein:
the base station configuring downlink power parameters for both a primary cell and a coordinated cell of a terminal in a CoMP set in which the terminal is located comprises:
when a dynamic point selection DPS mechanism of CoMP is used, the base station configuring that the primary cell and coordinated cell of the terminal use a same reference signal power parameter, a same OFDM symbol power parameter containing a CRS, and a same OFDM symbol power parameter excluding a CRS.

5. The method according to claim 1, wherein:
the downlink power parameters contain a cell-specific parameter P_{B}, a cell-specific parameter reference signal power P_{RS} and a terminal-specific parameter P_{A};
the base station configuring downlink power parameters for both a primary cell and a coordinated cell of a terminal in a CoMP set in which the terminal is located comprises:
when a dynamic point selection DPS mechanism of CoMP is used, the base station configuring that the primary cell and coordinated cell of the terminal use a same P_{B}, P_{RS} and P_{A}.

6. The method according to claim 1, wherein:
the downlink power parameters contain a cell-specific parameter P_{B}, a cell-specific parameter reference signal power P_{RS} and a terminal-specific parameter P_{A};
the base station configuring downlink power parameters for both a primary cell and a coordinated cell of a terminal in a CoMP set in which the terminal is located comprises:
when a DPS mechanism of CoMP is used, the base station configuring downlink power parameters for the primary cell of the terminal and configuring downlink power parameters for the coordinated cell of the terminal, and after selecting a used single cell, modifying the downlink power parameters of the primary cell of the terminal to downlink power parameters of the used single cell selected.

7. The method according to claim 1, wherein:
the downlink power parameters contain a cell-specific parameter P_{B}, a cell-specific parameter reference signal power P_{RS} and a terminal-specific parameter P_{A};
the base station configuring downlink power parameters for both a primary cell and a coordinated cell of a terminal in a CoMP set in which the terminal is located comprises:
when a DPS mechanism of CoMP is used, the base station configuring respective independent downlink power parameters for the primary cell and coordinated cell of the terminal.

8. The method according to claim 7, wherein: the base station notifying the terminal of the downlink power parameters comprises:
the base station sending downlink power parameters of a used single cell selected in the DPS mechanism to the terminal.

9. An apparatus for configuring downlink power parameters, comprising: a base station power parameter configuration and constraint unit and a base station power parameter selection and signaling sending unit, wherein:
the base station power parameter configuration and constraint unit is configured to: configure downlink power parameters for both a primary cell and a coordinated cell of a terminal in a coordinated multi-point CoMP set in which the terminal is located; and
the base station power parameter selection and signaling sending unit is configured to: notify the terminal of the downlink power parameters.

10. The apparatus according to claim 9, wherein:
the base station power parameter configuration and constraint unit is configured to configure downlink power parameters for both a primary cell and a coordinated cell of a terminal in a CoMP set in which the terminal is located by means of:
when a joint transmission JT mechanism of CoMP is used, configuring that the primary cell and coordinated cell of the terminal use a same power ratio between different symbols.

11. The apparatus according to claim 9, wherein:
the downlink power parameters contain a cell-specific parameter P_{B};
the base station power parameter configuration and constraint unit is configured to configure downlink power parameters for both a primary cell and a coordinated cell of a terminal in a CoMP set in which the terminal is located by means of:
when a joint transmission JT mechanism of CoMP is used, configuring that the primary cell and coordinated cell of the terminal use a same P_{B}.

12. The apparatus according to claim 9, wherein:
the base station power parameter configuration and constraint unit is configured to configure downlink power parameters for both a primary cell and a coordinated cell of a terminal in a CoMP set in which the terminal is located by means of:
when a dynamic point selection DPS mechanism of CoMP is used, configuring that the primary cell and coordinated cell of the terminal use a same reference signal power parameter, a same OFDM symbol power parameter containing a CRS, and a same OFDM symbol power parameter excluding a CRS.

13. The apparatus according to claim 9, wherein:
the downlink power parameters contain a cell-specific parameter P_{B}, a cell-specific parameter reference signal power P_{RS} and a terminal-specific parameter P_{A};
the base station power parameter configuration and constraint unit is configured to configure downlink power parameters for both a primary cell and a coordinated cell of a terminal in a CoMP set in which the terminal is located by means of:
when a dynamic point selection DPS mechanism of CoMP is used, configuring that the primary cell and coordinated cell of the terminal use a same P_{B}, P_{RS} and P_{A}; or,
configuring downlink power parameters for the primary cell of the terminal and configuring downlink power parameters for the coordinated cell of the terminal, and after selecting a used single cell, modifying the downlink power parameters of the primary cell of the terminal to downlink power parameters of the used single cell selected; or,
configuring respective independent downlink power parameters for the primary cell and coordinated cell of the terminal.

14. The apparatus according to claim 13, wherein:
the base station power parameter selection and signaling sending unit is configured to notify the terminal of the downlink power parameters by means of:
when the base station power parameter configuration and constraint unit configures the respective independent downlink power parameters for the primary cell and coordinated cell of the terminal, sending the downlink power parameters of the used single cell selected in the DPS mechanism to the terminal.
